**Europäisches Patentamt**

**European Patent Office**

**Office européen des brevets**

(19)

(11) Numéro de publication: **0 159 228**

**B1**

(12)

# FASCICULE DE BREVET EUROPÉEN

(45) Date de publication du fascicule du brevet:
**25.11.87**

(51) Int. Cl.⁴: **B 23 K 15/00,** G 21 C 3/34

(21) Numéro de dépôt: **85400481.9**

(22) Date de dépôt: **13.03.85**

(54) **Procédé et installation de soudage de grilles pour assemblage de combustible nucléaire.**

(30) Priorité: **13.03.84 FR 8403839**

(43) Date de publication de la demande:
**23.10.85 Bulletin 85/43**

(45) Mention de la délivrance du brevet:
**25.11.87 Bulletin 87/48**

(84) Etats contractants désignés:
**BE DE GB IT SE**

(56) Documents cité:
**FR-A-2 364 729**
**FR-A-2 532 215**
**US-A-4 111 348**
**US-A-4 378 482**

(73) Titulaire: **SOCIETE COGEMA, FRAMATOME et URANIUM PECHINEY, 2, rue Paul Dautier, F-78140 Velizy Villacoublay (FR)**

(72) Inventeur: **Vere, Bernard, No 2 Les Chusets Brie et Angonnes, F-38320 Eybens (FR)**
Inventeur: **Mathevon, Paul, Avenue Achille Maucuer, F-84500 Bollene (FR)**

(74) Mandataire: **Fort, Jacques, CABINET PLASSERAUD 84, rue d'Amsterdam, F-75009 Paris (FR)**

## Description

L'invention concerne la fabrication des grilles destinées à être incorporées dans des assemblages de combustible de reacteur nucléaire. Elle trouve une application particulièrement importante dans la fabrication des grilles destinées à des assemblages dont l'ossature comprend des pièces d'extrémité reliées par des tirants emprisonnés dans certains des alvéoles de grilles reparties régulièrement le long des tirants, les autres alvéoles des grilles supportant les crayons de combustible de l'assemblage.

Les grilles comprennent en général deux jeux de plaquettes disposées suivant deux directions orthogonales et assemblées à mi-fer afin de définir les cellules élémentaires que traversent les crayons et les tirants. Les plaquettes sont au surplus reliées, à leur périphérie, à une ceinture présentant la même forme que les plaquettes. Pour assurer la cohésion des grilles, ces pièces constitutives sont solidarisées à leurs intersections. Cette opération s'effectue souvent à l'heure actuelle par brasage manuel, c'est-à-dire par une opération longue et fastidieuse qui, au surplus, ne garantit pas une reproductibilité pleinement satisfaisante, même si l'on utilise un gabarit de maintien relatif, tel que celui décrit dans le document US-A-4 111 348, en vue de la réalisation de grilles dont les plaquettes sont découpées pour constituer des ressorts d'appui sur les crayons, ou dans le document FR-A-2 364 729.

On connaît (FR - A - 2 532 215) un procédé de soudage de grilles constituées par deux jeux de plaquettes disposées orthogonalement et dont les parties terminales sont solidarisées d'une ceinture, caractérisé en ce qu'on place la grille dans un cadre de mise en forme et de maintien mécanique de celle-ci présentant des passages d'accès aux points à souder sur les deux faces et sur les côtés de la grille; on saisit le cadre contenant la grille à l'aide d'un dispositif d'orientation porté par une table à mouvements croisés dans des directions perpendiculaires à la ligne de tir d'un organe de soudage par rayonnement; on fait circuler, à l'aide de la table, la grille pour faire passer chaque point à souder sur une face dans la ligne de tir de l'organe de soudage dont on commande l'émission au passage du point; et on répète les opérations de circulation et d'émission après des basculements de 90° autour d'un premier axe perpendiculaire à la ligne de tir à l'aide du dispositif d'orientation, afin de réliser les soudures sur l'ensemble des deux faces et de deux côtes. La grille étant montée de telle façon qu'elle ne peut tourner qu'autour d'un seul axe, il faut la déposer, puis la replacer dans une orientation à 90° dela première pour compléter les opérations de soudage.

L'invention vise à fournir un procédé et une installation de solidarisation par soudage des diverses pièces constitutives d'une grille, applicables aussi bien aux grilles à ressort découpé qu'à celles à ressort rapporté, permettant d'effectuer en séquence et de façon automatique la totalité des soudures nécessaires, sans dépose de la grille et dans des conditions assurant le maintien des pièces et l'absence de déformations.

Dans ce but, on répète les opérations de circulation et de soudage après avoir amené le cadre dans deux orientations opposées par basculement autour d'un second axe orthogonal au premier, afin de réaliser des soudures sur les deux derniers côtés à travers des passages d'accès ménagés dans le cadre, avant de déposer le cadre.

L'organe de soudage est avantageusement un générateur de faisceau d'électrons, le soudage étant alors effectué sous vide. Le soudage s'effectue alors que la grille est en déplacement, ce qui évite les à-coups et permet d'accroître la cadence de travail. Les moyens de focalisation et de déflection dont sont généralement munis les générateurs de faisceaux d'électrons utilisés pour le soudage peuvent être employés pour agrandir la tache focale afin de réaliser certaines soudures, et pour réaliser un "suivi" du déplacement du cadre, permettant de disposer d'un temps de soudage plus long pour chaque point.

Le procédé peut également être utilisé pour-effectuer des soudures dans les angles de la ceinture, après basculement du cadre dans des orientations autour du second axe à 45° de celles utilisées pour réaliser les soudures sur les côtés.

L'invention propose également une installation de soudage selon la revendication 6.

L'invention sera mieux comprise à la lecture de la description qui suit d'un mode particulier d'exécution, donné à titre d'exemple non limitatif. La description se réfère aux dessins qui l'accompagnent, dans lesquels:

- la figure 1 est un schéma en perspective montrant une fraction d'une grille à laquelle est applicable l'invention,
- la figure 2A est une vue en élévation et en coupe verticale partielle d'une installation selon un mode particulier d'exécution de l'invention,
- la figure 2B est une vue de dessus de la figure 2A, - la figure 2C est une vue en élévation de l'installation vue depuis la droite de la figure 2A, la porte du sas étant ouverte, suivant C-C sur la Figure 2B,
- la figure 3 est une vue montrant schématiquement en coupe suivant un plan vertical, un support de grille placé dans le sas,
- la figure 4A est une vue en élévation de la porte de séparation entre le sas et la chambre de soudage de l'installation des figures 2A-2C, la partie haute n'étant pas représentée,
- la figure 4B est une vue de dessus, en coupe partielle, de la porte de la figure 4A,
- la figure 4C est une vue de détail en coupe suivant la ligne C-C de la figure 4A,
- la figure 5A montre la moitié d'un cadre de maintien de grille utilisable dans l'installation suivant l'invention, les parties gauche et droite de la figure montrant le cadre respectivement vu côté plaque de base et côté plaque ammovible, certaines parties étant en coupe,

- la figure 5B est une vue en coupe suivant la ligne B-B de la figure 5A,

- la figure 5C est une vue en demi-élévation et demi-coupe dans un plan perpendiculaire à ceux des figures 5A et 5B,

- la figure 5D est une vue à grande échelle du détail représenté dans le cercle D de la figure 5C,

- la figure 6 est une vue en coupe suivant un plan parallèle à celui de la figure 2A, montrant la table à mouvements croisés de l'installation,

- la figure 7 est une vue en élévation simplifiée, partiellement en coupe, montrant la poupée portée par la table de la figure 6,

- la figure 8 est une vue simplifiée, en élévation et en coupe partielle, montrant l'ensemble de prise en charge de cadre du dispositif d'orientation.

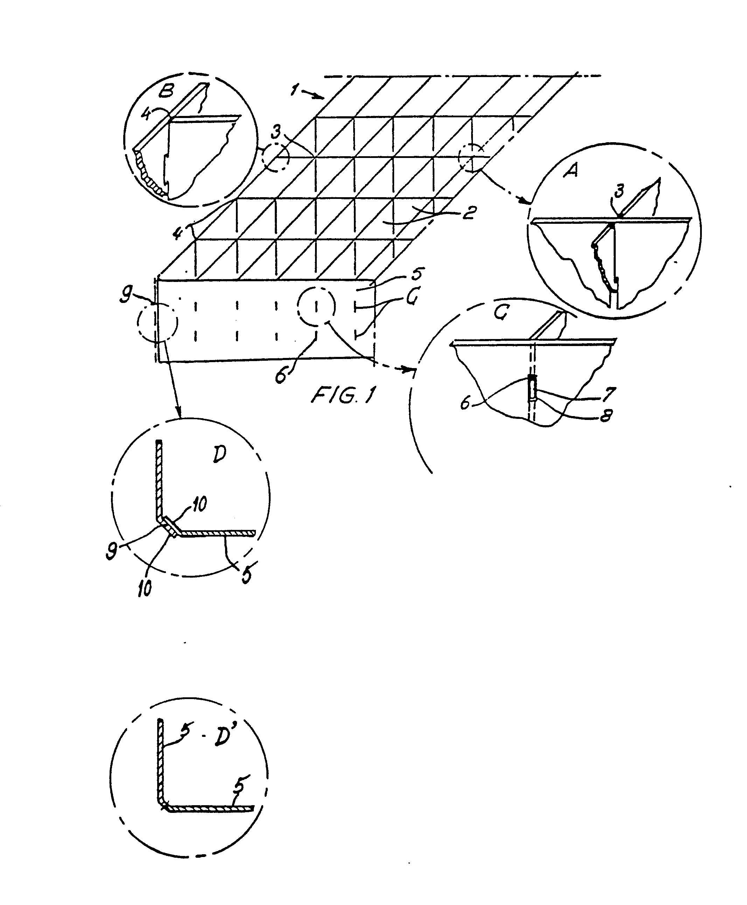

L'installation qui sera décrite à titre d'exemple permet notamment de solidariser par soudage les pièces constitutives d'une grille du genre montré en Figure 1, grille qui peut avoir la constitution détaillée décrite dans le document FR-A-2 474 229. Cette grille 1 comprend deux jeux de plaquettes élémentaires 2 disposées orthogonalement et assemblées à mi-fer. Une soudure de solidarisation 3, qui sera appelée par la suite "soudure de type A" et dont le détail est indiqué en A sur la Figure 1, solidarise les plaquettes à chaque intersection, sur chacune des deux grandes faces de la grille 1. Les bords des plaquettes 2 forment avec des plaquettes périphériques 5 constituant la ceinture une intersection en forme de T qui reçoit, sur chaque face, une soudure 4 qui sera qualifiée de "type B" par la suite.

Les plaquettes 2 comportent à leur extrémité des tenons 7 qui s'engagent dans des mortaises 8 pratiquées dans les plaquettes 5 de la ceinture. Les tenons, dont certains peuvent être déformés pour réaliser un blocage mécanique, sont soudés à la ceinture 5 en des points répartis sur la ceinture. Le soudage ainsi effectué sur chant sera appelé "de type C".

Enfin, des soudures 9, réalisées sous forme d'un cordon, finissent de solidariser les éléments de la grille en reliant des bords tombés 10 pratiqués aux extrémités des plaquettes périphériques 5. Ces soudures seront appelées "soudures de type D". Les soudures D peuvent, pour certains types de plaquettes 5, être bord à bord, comme indiqué en D' sur la Fig. 1.

On décrira maintenant une installation permettant d'exécuter de façon satisfaisante les nombreux points de soudure requis, à l'aide d'outillages de grande précision opérant dans une chambre à atmosphère contrôlée qui évite toute pollution pouvant entraîner une corrosion et nuire à la qualité du soudage.

Pour que le soudage des constituants de la grille s'effectue alors qu'ils sont dans une position relative correcte, chaque grille assemblée est mise en place dans un cadre destiné à maintenir les composants de la grille dans une position bien déterminée et, enfin, à constituer un ensemble manipulable pouvant être amené dans toutes les orientations requises pour le soudage. L'installation qui sera décrite est prévue pour manipuler de tels cadres qui seront décrits plus loin.

L'installation peut être regardée comme comportant une structure fixe et délimitant une enceinte munie d'un sas et de groupes de pompage, un organe de soudage fixé à la structure et un automate de manipulation placé à l'intérieur de la structure fixe. Ces divers composants seront successivement décrits.

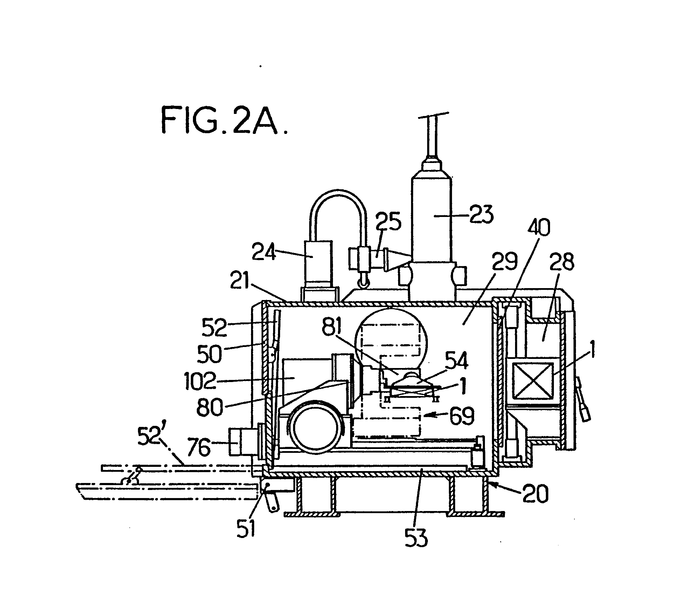

La structure fixe 20 (Figures 2A-2C) comporte une enceinte 21 mécano-soudée dont la face inférieure repose sur des semelles ancrées au sol. A l'enceinte 21 est accolé un sas d'introduction et de retrait 28, séparé par une porte 40 de la chambre de soudage 29 délimitée par l'enceinte 21 et séparée de l'atmosphère par une porte munie d'un levier de verrouillage et d'ouverture manuels.

La chambre de soudage 29 et le sas 28, pouvant avoir des capacités respectives de 2m³ et 0,29 m³ pour l'application envisagée ici, sont munis de groupes de pompage respectifs 27 et 26. Le groupe 26 peut alors se composer d'une pompe mécanique 30, d'une pompe "ROOTS" 31 et d'une colonne de pompage par diffusion 32 assurant respectivement des débits d'environ 100 m³/h, 500 m³/h et 2300 l/sec.

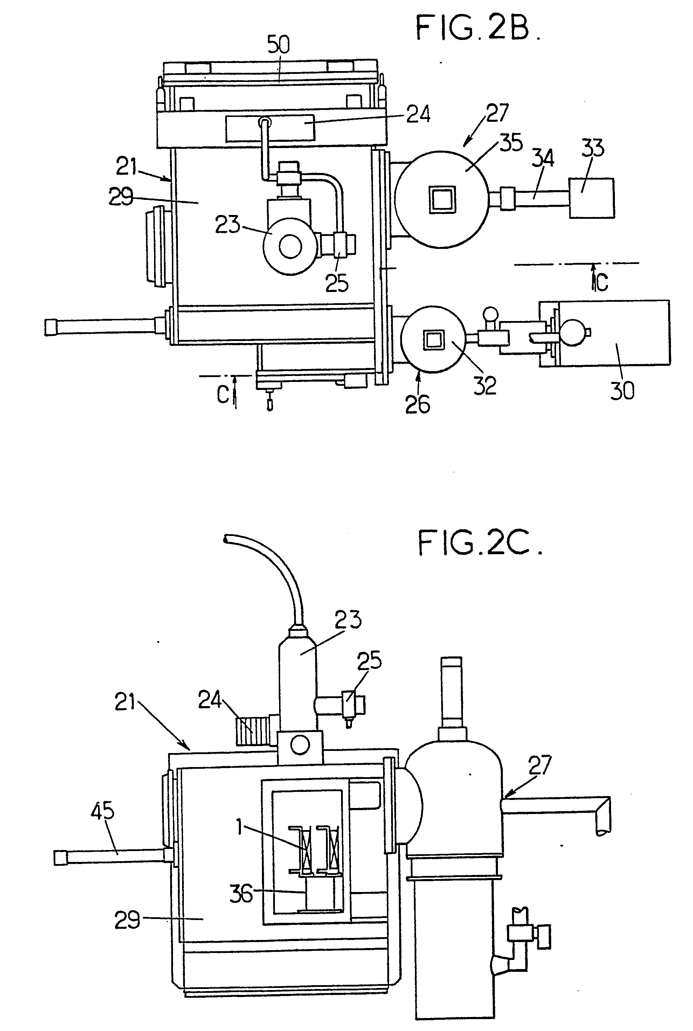

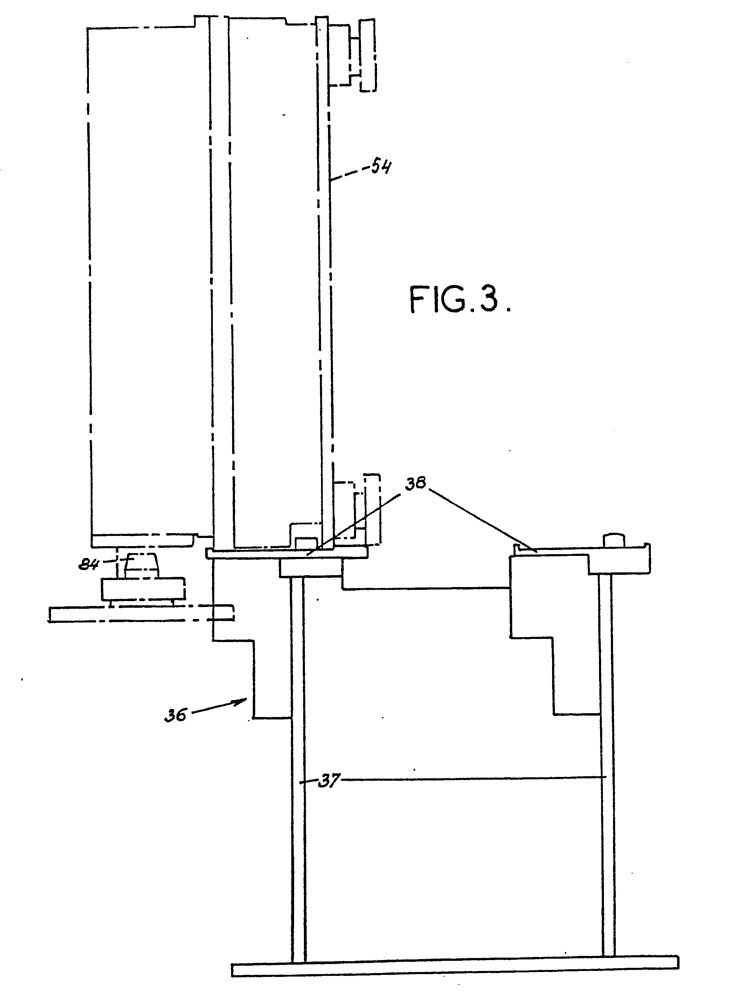

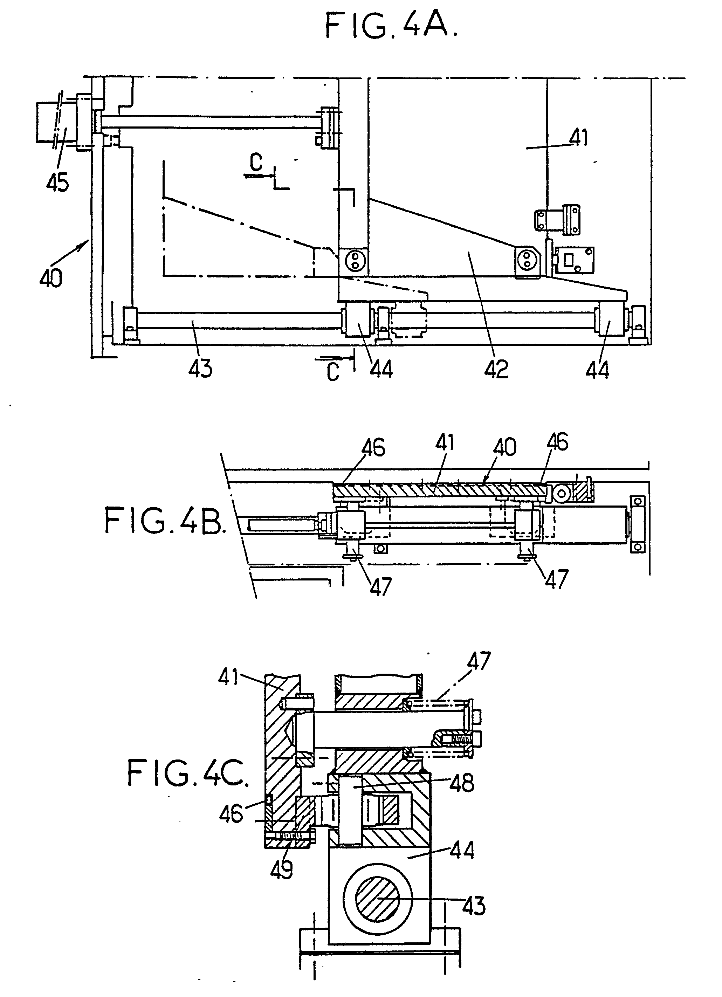

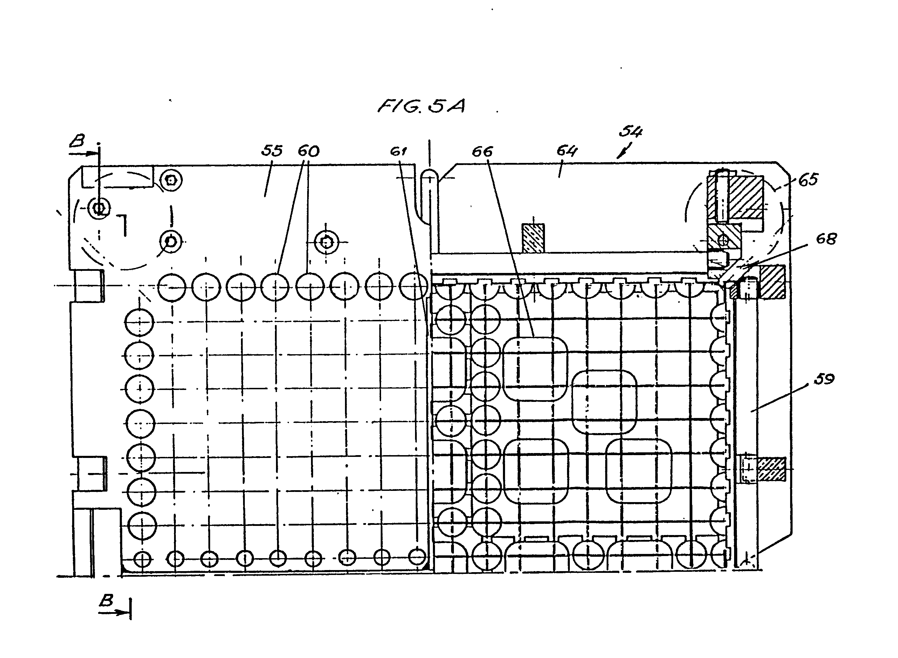

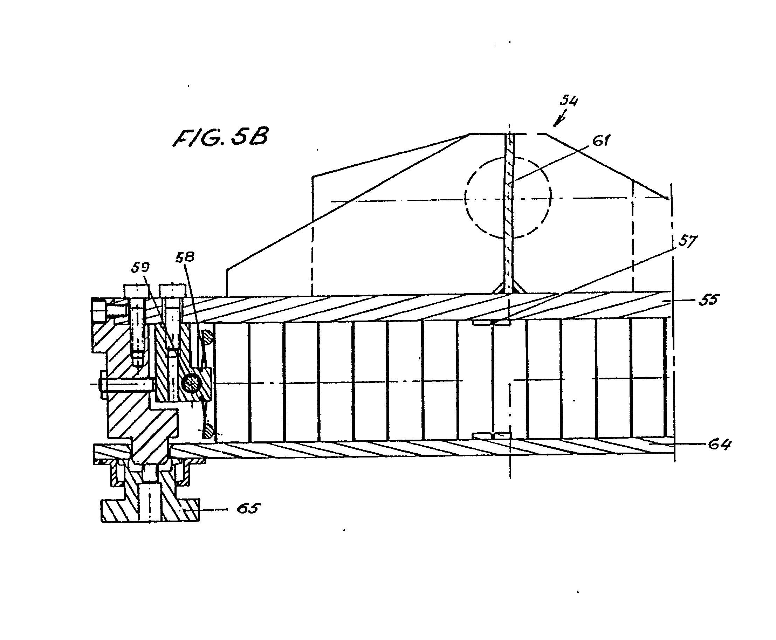

Le groupe 27 peut se composer d'une pompe mécanique 33, d'une pompe 34 type "ROOTS" et d'une colonne de pompage par diffusion 35 assurant respectivement des débits d'environ 200 m³/h, 1000 m³/h, 6000 l/sec. Ces deux groupes 26 et 27 permettent de mettre sous vide le sas et la chambre de soudage. Dans le sas 28 est placé un stand support de grilles 36, représenté en détail sur la Fig. 3 (à plus grande échelle que sur la Fig. 2C). Ce support se compose de deux chandelles 37 espacées, délimitant ainsi l'emplacement nécessaire à la prise et la dépose par automate des pièces. Des glissières 38, fixées à la partie supérieure des chandelles 37, ont une forme correspondant à celles des cadres de maintien des grilles. Elles permettent la dépose et la prise des cadres par l'automate. La porte de séparation 40 (Fig. 4A, 4B et 4C) est constituée d'un plateau 41, avantageusement en acier, relié, par l'intermédiaire d'équerres 42, à des douilles à billes 44. Ces douilles 44 sont prévues pour se déplacer le long de glissières fixes 43. Un vérin 45 permet de déplacer la porte entre une position de fermeture et une position d'effacement, pour laquelle le sas 28 et la chambre de soudage 29 communiquent, et l'automate décrit plus loin peut venir prendre ou déposer un cadre sur le support 36. La porte 40 comporte à sa périphérie des portées de réception des joints d'étanchéité 46. Pour éviter l'usure rapide des joints 46 par frottement, des ressorts de compression 47 (Fig. 4C) sont placés entre les douilles et la porte et tendent à éloigner la porte des portées de l'ouverture de communication. Ainsi, la translation s'opère-t-elle sans frottement des joints sur la paroi. Un axe 48 (Fig. 4C), solidaire des douilles 44, coopère avec une rampe inclinée 49 liée au plateau 41 et possédant une inclinaison d'environ 30%. Il provoque l'application de la porte sur la paroi pour assurer la séparation étanche des deux chambres. Lors du fonctionnement, le vérin 45 déplace la porte en translation de la position ouverte à la position de fermeture. Lorsque la porte est arrêtée par ses butées, le vérin poursuit sa course en déplaçant l'axe 48 dans la rampe 49 jusqu'à ce que les joints 46 soient en contact étanche avec les portées de la paroi (Fig. 2A et 2B).

La porte arrière 50 est destinée à permettre la maintenance de l'automate. Elle est articulée sur un axe horizontal de basculement 51.

Sur la face interne de cette porte 50 sont fixés des rails 52 qui, lorsque la porte est ouverte (comme indiqué en traits mixtes sur la Fig. 2A), viennent s'aligner en 52' avec des rails 53 de mise en place et de supportage de l'automate. On peut en conséquence glisser l'automate sur les rails jusqu'à la position de travail et le retirer. L'organe de soudage 23 est fixé sur le plafond de l'enceinte 21. Il comporte un générateur de faisceaux d'électrons muni d'un système de focalisation et de déflexion, qui peut être d'un type couramment disponible, associé à une alimentation électrique à haute tension munie de moyens de commande. On peut indiquer, à titre d'exemple, que le soudage de plaquettes en alliage à base de zirconium dit "zircaloy", peut être effectué dans de bonnes conditions avec une puissance de 1,5 kW. On pourra utiliser une alimentation à haute tension de 30 kV permettant d'obtenir une puissance maximale du canon d'environ 2,3 kW.

Le canon peut comporter en outre une caméra de télévision (non représentée) associée à un écran pour visualiser les points de soudure effectués lorsque le tir est arrêté.

Un groupe de pompage est associé au générateur: dans le cas illustré, il est constitué d'une pompe mécanique 24 associée à deux pompes turbomoléculaires 25 assurant, respectivement, des débits de l'ordre de 15 m³/h et 170 l/sec. Une vanne de sectionnement permet d'isoler le groupe de pompage et interdit l'émission du faisceau en cas de remontée accidentelle de la pression dans le canon du générateur.

On verra plus loin que l'on effectue les soudures de types A et B alors que la grille se déplace. Deux solutions peuvent alors être envisagées. La première consiste à déplacer la grille à vitesse suffisamment lente pour que la durée pendant laquelle le point A ou B est dans le faisceau et ce dernier peut être émis, suffise à un soudage suffisant. La seconde consiste à utiliser le système de déflexion du générateur pour "suivre" le point à souder avec le faisceau. On peut alors débuter le tir avant que le point à souder soit sur l'axe théorique du faisceau et le poursuivre après cet axe. Cela permet, à intensité de soudage égale, d'augmenter la vitesse de déplacement de la grille. Ce suivi peut être réalisé avec un système de déflexion classique comportant des bobines de déflexion dans deux directions orthogonales X et Y associées à une électronique de commande. Le système de focalisation peut, de son côté, être utilisé pour les soudures type C afin de déformer et d'agrandir la tache focale.

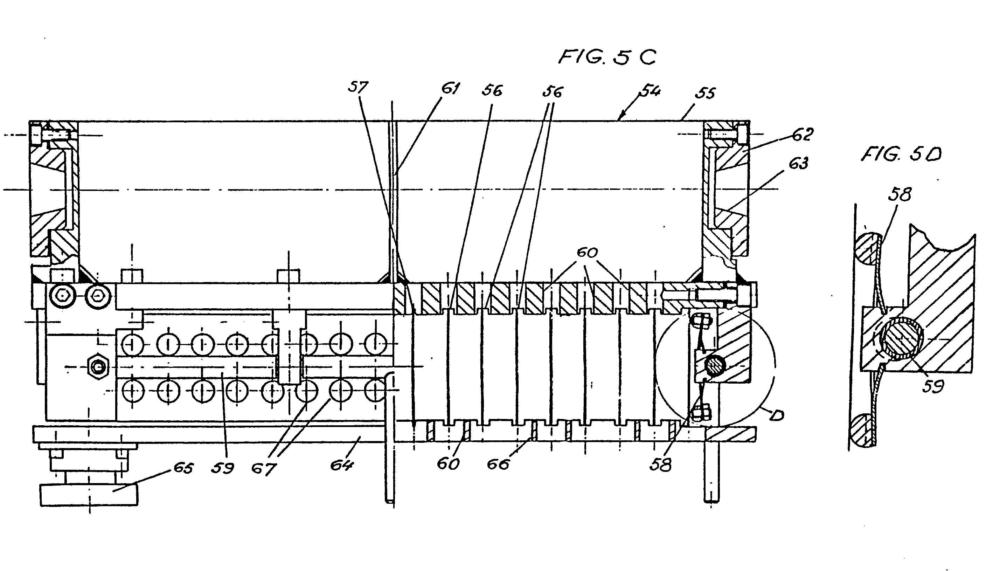

Chaque cadre 54 de maintien des plaquettes de grille peut avoir la constitution montrée en Figures 5A à 5D. Le cadre 54 comprend une plaque de base 55 munie, sur sa face externe, de nervures de renfort 61. Deux de ces nervures sont prévues pour recevoir, à leurs extrémités, des douilles d'accrochage 62 percées d'un trou conique 63 (figure 5C) servant à recevoir des pions appartenant à l'automate.

Il comporte également une plaque amovible 64 formant couvercle. Lorsque la grille est placée, la plaque 64 est fixée à la plaque de base 55 par des écrous imperdables 65 situés aux quatre coins du cadre. Dans la face interne de la plaque de base 55 et dans la plaque amovible 64 sont ménagés deux jeux de rainures parallèles 56. Celle de ces rainures qui est le plus près du plan médian du cadre (57 sur la Figure 5C), est usinée de manière à permettre la mise en référence d'une plaquette de la grille qui est voisine du centre du réseau. La Figure 5D montre des lames à ressort 58 commandées par des excentriques 59 qui permettent d'appuyer sur les plaquettes extérieures et provoquent la mise en place de l'ensemble des plaquettes par rapport à la plaquette engagée dans la rainure 57.

La plaque de base 55 et la plaque amovible 64 comportent des trous 60 dont le centre coincide avec les intersections des plaquettes permettant ainsi l'exécution des soudures de type A et de type B. La plaque 64 comporte de plus des ouvertures 66 de section suffisante pour laisser passer des composants supplémentaires tels que des languettes de soudage de la grille sur des tubes guides.

Des trous 67 dans les plaquettes élastiques 58 permettent d'exécuter les soudures de type C. Des passages libres 68 sont définis par les extrémités des plaquettes élastiques 58 à chaque coin du cadre afin de permettre la soudure en cordon type D.

L'automate 69 placé dans la chambre de soudage 29 est prévu pour accomplir plusieurs fonctions:

- prise et dépose d'un cadre 54 contenant une grille sur le support 36 dans le sas 28,
- présentation successive des six faces de la grille dans la chambre 29.

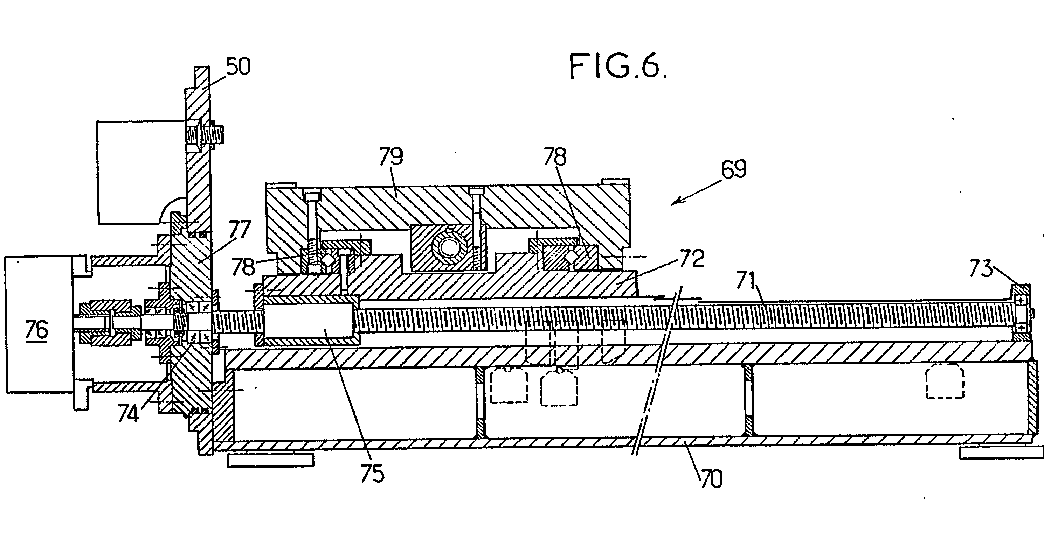

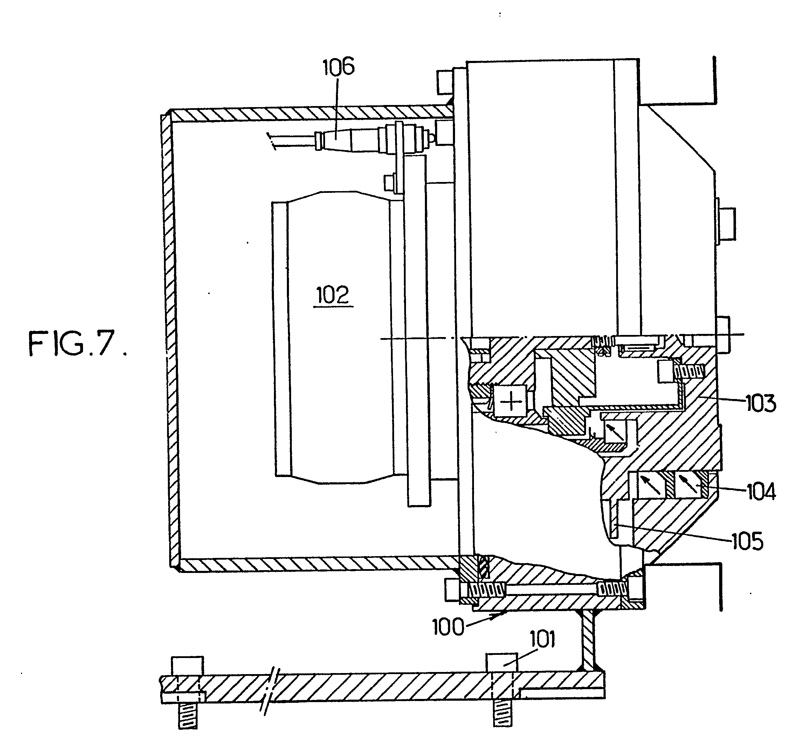

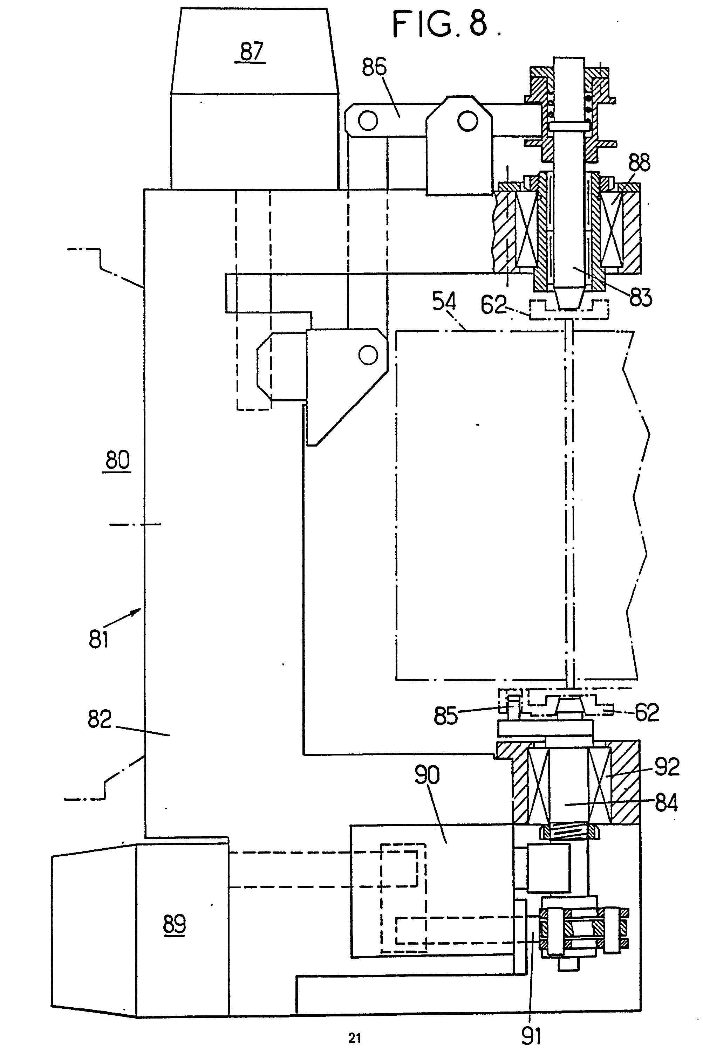

L'automate 69 montré en Figures 6, 7 et 8 est destiné à remplir ces fonctions. Il est constitué par une table à mouvements croisés (Figure 6) et une poupée 80 portée par la table (Figures 7 et 8).

La partie fixe de la table à mouvements croisés est formée par un châssis 70 mécano-soudé qui repose sur le fond de la chambre de soudage 29.

Cette structure prend appui par l'intermédiaire de rotules (non représentées). Ces rotules sont escamotables à l'aide d'excentriques. Lorsqu'elles sont escamotées, l'ensemble de l'automate repose sur les rails 53 (Figure 2A), ce qui permet de sortir l'automate pour en assurer la maintenance.

Le châssis 70 est muni de deux rails (non représentés sur la Figure 6) de guidage sur lesquels se déplace une table 72 assurant les mouvements suivant une direction X. Une vis de commande 71 suivant la direction X (Figure 6) est retenue dans le châssis 70 par un palier 73 et, dans la porte 50, par un palier 74. La vis 71 est accouplée à l'arbre d'un moteur électrique d'entrainement 76 placé hors de l'enceinte. Ce moteur 76 est porté par une plaque 77 fixée à la porte 50 par des vis (non représentées). La plaque est ainsi démontable pour permettre de désaccoupler le moteur 76 du reste de l'automate et d'extraire ce dernier sur les rails 52 pour maintenance. La table est munie d'un écrou à billes 75 monté sur la vis 71 dont la longueur est suffisante pour permettre d'amener la table 72 jusqu'à la porte 40 au sas 28.

La table 72 porte deux rails 78 orientés suivant la direction Y. La table 79 en Y est entraînée par un système vis à billes-écrou similaire à celui qui permet les déplacements en Y. La course de la table 79 est telle que la totalité d'une face de la grille à souder soit déplaçable sous le faisceau. d'électrons.

La table 79 porte enfin une poupée 80 (Figures 2A, 7 et 8) et ses moteurs d'entraînement. La poupée 80 comporte un carter 100 en plusieurs pièces assemblées, fixé sur la table 79 par exemple par des vis 101. Sur ce carter est fixé un moteur électrique 102 dont l'arbre de sortie, parallèle à la direction X, est accouplé à un manchon 103 monté rotatif dans des roulements avec dispositifs d'étanchéité en cascade 104 portés par le carter. Ce manchon porte un disque 105 muni d'alvéoles à intervalles angulaires de 45°, coopérant avec un poussoir de détection 106 porté par le carter 100.

Le manchon 103 est prévu pour être fixé de façon démontable à un ensemble 81 de prise en charge de cadre et d'orientation de celui-ci autour d'un axe perpendiculaire à celui de la poupée. Cet ensemble (Figure 8) comporte un étrier 82 dans lequel sont montées deux broches rotatives définissant l'axe d'orientation. Ces broches 83 et 84 sont prévues pour saisir le cadre 54 équipé de la grille à souder, indiqué en traits mixtes sur la Figure 8. Les broches 83 et 84 comportent à cet effet un nez conique destiné à s'engagerdans les bagues 62. Le maintien du cadre est, de plus, assuré par un pion ou des pions 85 d'indexage solidaires de la broche 84 et s'engageant dans un logement du cadre 54.

Pour permettre la saisie d'un cadre 54 et sa déposé, la broche 83 est reliée par une tringlerie à levier 86 et biellette à un moteur électrique 87. Lorsqu'il est excité le moteur 87 avance la broche 83 dans un palier 88 pour effectuer la prise et le bridage du cadre 54. Le bridage s'effectue donc par l'action de la broche 83 et de la broche 84 qui agit alors comme contrepointe.

Pour permettre l'orientation du cadre, la broche 84 est commandée en rotation par un moteur électrique pas-à-pas 89 lié à une glissière 90. La glissière entraîne un système à biellette 91 qui fait tourner la broche 84 guidée dans un palier 92. Le moteur 89 est prévu pour provoquer un déplacement angulaire de 90° du cadre 54. Ce déplacement ne peut pas être inférieur à 90° et, pour cela, le moteur agit en tout ou rien.

Le procédé suivant l'invention est mis en oeuvre de la façon suivante dans l'installation qui vient d'être décrite.

On assemble tout d'abord les plaquettes 2, 5 de la grille à souder et on la monte dans le cadre 54, dont la plaque amovible est enlevée et dont les lames ressorts 58 sont en retrait. Puis on fixe la plaque amovible 64 que l'on bloque à l'aide des écrous 65 et on serre les plaquettes les unes contre les autres à l'aide des excentriques 59. Les plaquettes prennent alors une position bien déterminée en prenant la position correcte dans les rainures 56, par rapport à la plaquette centrale maintenue dans une position de référence par les rainures usinées 57.

Le cadre 54 portant une grille est alors placé sur le support 36 dans le sas 28. On peut en même temps extraire le cadre contenant la grille qui vient de subir le cycle de soudage.La porte du sas est refermée. Le sas 28 est mis sous vide. La séquence des opérations qui suit peut s'effectuer de façon automatique, par exemple en utilisant un automate programmable.

La porte de séparation 40 est tout d'abord ouverte. Le moteur 76 entre en action pour déplacer la table à mouvements croisés, la poupée et l'ensemble de prise suivant la direction X jusqu'à ce que l'étrier 82, alors en position verticale, vienne autour du cadre équipé 54. Au cours de cette avance, les deux broches 83 et 84 sont écartécs l'une de l'autre. Elles sont rapprochées pour saisir le cadre. Puis le moteur 76 est de nouveau actionné, en sens inverse du précédent, pour ramener le cadre dans la chambre de soudage 29. La porte 40 est fermée. La chambre de soudage 29 est mise sous vide. Les opérations de soudage proprement dites sont alors effectuées. Diverses séquences peuvent être utilisées pour traiter successivement toutes les faces et côtés. On peut notamment:

- faire tourner la poupée 80 de 90° à l'aide du moteur 102 pour présenter la plaque de base 55 sous le générateur de faisceau d'électrons,

- déplacer le cadre 54 pas-à-pas selon les axes X et Y à l'aide des moteurs de la table à mouvements croisés de façon à présenter successivement sous le faisceau chacune des ouvertures 60 prévues pour réaliser une soudure A ou 8 sur la première face de la grille,

- basculer la poupée 80 de 180° à l'aide du moteur 102 de façon à présenter la seconde face de la grille et exécuter les soudures A et B sur cette seconde face par les ouvertures 60 et 66 en répétant la séquence précédente,

- basculer le cadre 54 de 90°, à l'aide du moteur 89 aqissant sur la broche 84 pour amener l'une des faces latérales de la grille dans une position perpendiculaire au faisceau, et déplacer pas-à-pas le cadre selon les axes X et Y à l'aide des moteurs de la table à mouvements croisés pour réaliser les soudures de type C,

- basculer la poupée 80 de 45° à l'aide du moteur 102 de façon à présenter un premier passage 68 sous le faisceau, puis réaliser le cordon de soudure type D du premier coin de grille par déplacement suivant la direction Y,

- basculer la poupée 80 de 45° pour réaliser les soudures de type C de la seconde face latérale,

- basculer de 45° la poupée 80 pour permettre de réaliser la soudure type D d'un second coin,

- répéter les deux opérations ci-dessus pour souder les deux dernières faces latérales et les deux dernièrs coins.

Une fois ces opérations effectuées et la grille complètement soudée, le cadre équipé de cette grille doit être ramené dans le sas et déposé sur le support. Pour cela, on bascule de 90° le cadre 54 à l'aide du moteur 89, puis on bascule la poupée 80 de 90° de façon que le cadre se retrouve en position verticale. La porte de séparation 40 est ouverte. Le moteur 76 de déplacement en X est actionné pour amener le cadre sur le support 36 dans le sas. Les broches 83 et 84 sont écartées pour libérer le cadre. L'étrier est dégagé, puis amené en prise sur le cadre déjà placé manuellement sur le support, dans une position adjacente à la précédente. Le nouveau cadre équipé est ramené dans la chambre de soudage. La porte de séparation est fermée. Les opérations de soudage peuvent alors reprendre sur la nouvelle grille. Le sas peut être ramené à la pression atmosphérique pour permettre l'ouverture manuelle de la porte d'accés, l'enlévement de la grille soudée et la dépose d'un cadre portant une nouvelle grille dans le sas.

**Revendications**

1. Procédé de soudage de grilles constituées par deux jeux de plaquettes (2) disposées orthogonalement et dont les parties terminales sont solidarisées d'une ceinture, suivant lequel on place la grille dans un cadre (54) de mise en forme et de maintien mécanique de celle-ci présentant des passages (60, 66, 67) d'accès aux points à souder sur les deux faces et sur les côtés de la grille; on saisit le cadre contenant la grille à l'aide d'un dispositif d'orientation (80, 81) porté par une table (72) à mouvements croisés dans des directions perpendiculaires à la ligne de tir d'un organe de soudage par rayonnement; on fait circuler, à l'aide de la table, la grille pour faire passer chaque point à souder sur une face dans la ligne de tir de l'organe de soudage (23) dont on commande l'émission au passage du point; et on répète les opérations de circulation et d'émission après des basculements de 90° autour d'un premier axe perpendiculaire à la ligne de tir à l'aide du dispositif d'orientation, afin de réaliser les soudures sur l'ensemble des deux faces et de deux côtés, caractérisé en ce qu'on répète les opérations de circulation et de soudage après avoir amené le cadre dans deux orientations opposées par basculement autour d'un second axe orthogonal au premier, afin de réaliser des soudures sur les deux derniers côtés a travers des passages d'accès, ménagés dans le cadre avant de déposer le cadre.

2. Procédé selon la revendication 1, caractérisé en ce que le soudage est effectué par faisceau d'électrons sous vide.

3. Procédé selon la revendication 1 ou 2, caractérisé en ce que le soudage est effectué alors que la grille est en déplacement.

4. Procédé selon la revendication 1, 2 ou 3, caractérisé en ce que l'on défléchit le faisceau de rayonnement au cours du soudage pour suivre le déplacement du cadre et augmenter le temps de soudage pour chaque point.

5. Procédé selon l'une quelconque des revendications 1 à 4, caractérisé en ce qu'on effectue également des soudures d'angle entre plaquettes (5) constituant la ceinture, après basculement du cadre dans des orientations autour du premier ou du second axe à 45° de celles utilisées pour réaliser les soudures sur les côtés.

6. Installation de soudage de grilles constituées par deux jeux de plaquettes (2) disposées orthogonalement et dont les parties terminales sont solidarisées d'une ceinture, comprenant dans une enceinte à atmosphère contrôlée (21) munie d'un sas (28), une table (72) à déplacements croises portant au moins un dispositif d'orientation d'un cadre (54) de réception de la grille et qui est capable d'amener chaque face et chaque côté de la grille à son tour dans une orientation perpendiculaire à la ligne de tir d'un organe de soudage par rayonnement, avantageusement d'un générateur de faisceau d'électrons, et de deplacer le cadre dans deux directions perpendiculaires à la ligne de tir, de façon à amener chaque point à souder à son tour face à la ligne de tir, le dispositif d'orientation et la table étant munis de moteurs de commande et constituant un automate de présentation de tous les points de soudure à exécuter en succession face à la ligne de tir, caractérisée en ce que le dispositif d'orientation comporte une poupée (80) permettant d'orienter un étrier (81) autour d'un axe parallèle à l'un des axes de déplacement de la table (72), ledit étrier étant muni de moyens, tels que des broches alignées (83, 84), de saisir du cadre et de rotation de ce dernier autour d'un second axe, parallèle à l'autre direction de déplacement de la table et en ce que des passages d'accès du rayonnement aux points à souder sur la ceinture sont ménagés dans le cadre.

7. Installation selon la revendication 6, caractérisée en ce que l'étrier porte un moteur (87) permettant de déplacer les broches suivant leur axe d'alignement entre une position rapprochée de saisie du cadre (54) et une position éloignée de libération du cadre, l'une au moins des broches étant de plus munie de moyens d'entraînement en rotation (89).

## Claims

1. Process for welding grids consisting of two mutually orthogonal sets of strips (2) whose end portions are fastened to a belt, including: placing the grid in a frame (54) for maintaining it in shape and for mechanically holding it, having passages (60, 66, 67) for access to the spots to be welded on the two surfaces and on the sides of the grid; seizing the frame containing the grid with an orientation device (80, 81) carried by a crossmotion table (72) for movement in directions perpendicular to the firing line of a radiation welding unit; moving the grid with said table for passing each spot to be welded on a surface across the firing line of the welded unit (23) whose emission is energized when the spot confronts the beam; and repeating the movement and emission steps after tilting by 90° around a first axis perpendicular to the firing line by means of the orientation device, in order to produce welds on all of the two surfaces and on two sides, characterized in that the movement and welding steps are repeated after the frame has been moved into two opposed orientations by tilting around a second axis at right angles to the first, in order to produce welds on the last two sides, through access passages formed in the frame, before releasing the frame.

2. Process according to claim 1, characterized in that welding is carried out by electron beam welding under vacuum.

3. Process according to claim 1 or 2, characterized in that welding is carried out whilst the grid is in movement.

4. Process according to claim 1, 2 or 3, characterized in that the radiation beam is deflected during welding to follow the movement of the frame and to increase the welding time for each spot.

5. Process according to any one of claims 1-4, characterized in that corner welds are also produced between strips (5) constituting the belt, after the frame has been tilted into orientations around the first or the second axis at 45° from those used for producing the welds on the sides.

6. Apparatus for welding grids consisting of two sets of strips (2) arranged at mutually right angles and whose terminal portions are fast to a belt, comprising, in an enclosure with controlled atmosphere (21) provided with a lock (28), a cross-motion table (72) carrying at least one orientation device for a frame (54) which receives the grid and is capable of bringing each surface and each side of the grid in turn into an orientation perpendicular to the firing line of a radiation welding unit, advantageously an electron beam generator, and moving the frame along two directions perpendicular to the firing line, so as to bring each spot to be welded in turn along the firing line, the orientation device and the table being provided with control motors and constituting an automatically controlled unit for presenting all spots where welds are to be carried out in succession along the firing line, characterized in that the orientation device comprises a headstock (80) enabling a yoke (81) to be angularly moved about an axis parallel to one of the axes of movement of the table (72), said yoke being provided with means, such as aligned spindles (83, 84) for seizing the frame and locating the latter around a second axis, parallel to the other direction of movement of the table, and in that passages for access of radiation to the spots to be welded on the belt are formed in the frame.

7. Apparatus according to claim 6, characterized in that the yoke bears a motor (87) enabling the spindles to be moved along their alignment axis between a mutually close position for seizing the frame (54) and a spaced apart position for releasing the frame, one at least of the spindles being further provided with rotary drive means (89).

## Patentansprüche

1. Verfahren zum Schweißen von aus zwei orthogonal zueinander angeordneten Plattensätzen (2) bestehenden Gittern, deren Endbereiche durch einen Ring befestigt werden, wobei das Gitter in einem Rahmen (54) zur Formgebung und mechanischen Halterung des Gitters platziert wird, wobei der Rahmen Zugangspassagen (60, 66, 67) zu den Schweißpunkten auf den beiden Flächen und den Seiten des Gitters aufweist, der das Gitter enthaltende Rahmen mittels einer Ausrichtvorrichtung (80, 81) gegriffen wird, die von einem Tisch (72) getragen wird, der gekreuzte Bewegungen in Richtungen senkrecht zur Arbeitsrichtung eines Strahlschweißorgans ausführt, wobei mit Hilfe des Tisches das Gitter bewegt wird, um jeden Schweißpunkt auf einer Seite des Gitters in die Arbeitslinie des Schweißorgans (23) kommen zu lassen, das aktiviert wird,wenn der Schweißpunkt passiert und wobei die Schritte des Zirkulierens und Aktivierens des Schweißorgans nach Drehung um 90° um eine erste Achse, die senkrecht zur Arbeitslinie verluft, mittels der Ausrichtvorrichtung wiederholt werden, um die Schweißungen der beiden Seiten und der beiden Flächen durchzuführen, dadurch gekennzeichnet, daß die Schritte des Zirkulierens und des Schweißens wiederholt werden, nachdem der Rahmen in zwei entgegengesetzte Orientierungen durch eine Drehung um eine zweite Achse gebracht worden ist, die senkrecht zur ersten Achse liegt, um die Schweißungen auf den beiden letzten Seiten durch die an den Rand eingearbeitete Zugangspassagen hindurch auszuführen, bevor der Rahmen abgesetzt wird.

2. Verfahren nach Anspruch 1, dadurch gekennzeichnet, daß das Schweißen mittels eines Elektronenstrahls im Vakuum erfolgt.

3. Verfahren nach Anspruch 1 oder 2, dadurch gekennzeichnet, daß das Schweißen erfolgt, während das Gitter verschoben wird.

4. Verfahren nach einem der Ansprüche 1, 2 oder 3, dadurch gekennzeichnet, daß das Strahlenbündel während des Schweißens gebeugt wird, um der Verschiebung des Rahmens zu folgen und um die Schweißzeit pro Schweißpunkt zu erhöhen.

5. Verfahren nach einem der Ansprüche 1 bis 4, dadurch gekennzeichnet, daß ebenfalls Winkelschweißungen zwischen den Platten (5) vorgenommen werden, die den Ring bilden, nachdem der Rahmen in Richtungen um die erste oder die zweite Achse um 45° verschwenkt wurde, wobei die Achsen zur Erstellung der Verschweißungen auf den Seiten verwendet wurden.

6. Einrichtung zum Schweißen von Gittern, die aus zwei Plattensätzen (2) bestehen, die senkrecht zueinander angeordnet sind und deren Endteile an einem Ring befestigt sind, die in einem Behälter mit kontrollierter Atmosphäre (21), der mit einer Schleuse (28), einem Kreuzbewegungstisch (72), der mindestens eine Vorrichtung zur Ausrichtung eines Rahmens (54) zur Aufnahme des Gitters und der jede Seite und jede Fläche des Gitters in eine Orientierung senkrecht zur Arbeitslinie eines Strahlenschweißgeräts, vorzugsweise eines Elektronenstrahlerzeugers bringen kann und der den Rahmen in zwei Richtungen senkrecht zur Arbeitslinie verschieben kann, um jeden Schweißpunkt jeweils in die Arbeitslinie zu bringen, versehen ist und die Ausrichtvorrichtung und der Tisch mit Stellmotoren versehen sind und einen Automaten zum Präsentieren eines jeden Schweißpunktes darstellen, wobei die Verschweißungen aufeinanderfolgend in der Arbeitslinie des Schweißorgans erfolgen, dadurch gekennzeichnet, daß die Ausrichtvorrichtung einer Spindel (80) aufweist, die es ermöglicht, einen Rahmen (81) um eine Achse auszurichten, die parallel zu einer der Verschiebeachsen des Tisches (72) verläuft, wobei der Rahmen mit Organen, wie z. B. ausgerichteten Zapfen (83, 84) versehen ist, die den Rahmen kreisen und letzteren um eine zweite Achse drehen, die parallel zur anderen Verschieberichtung des Tisches verläuft und dadurch, daß die Zugangspassagen für die Strahlung an den Schweißpunkten auf dem Ring in den Rahmen eingearbeitet sind.

7. Einrichtung nach Anspruch 6, dadurch gekennzeichnet, daß der Rahmen einen Motor (87) aufweist, der es ermöglicht, die Zapfen entlang ihrer Ausrichtungsachse zwischen einer Eingriffsstellung in den Rahmen (54) und einer entfernten Lösungsstellung des Rahmens zu bewegen, wobei mindestens einer der Zapfen außerdem mit einem Drehantriebsorgan (89) versehen ist.

FIG. 1

# FIG.2A.

# FIG.2B.

# FIG.2C.

FIG.3.

# FIG.4A.

# FIG.4B.

# FIG.4C.

FIG. 5A

FIG. 5B

FIG. 5 C

FIG. 5 D

0 159 228

FIG.6.

FIG.7.

FIG. 8.